# FASCICULE DE BREVET EUROPEEN

(11) **EP 0 345 521 B1**
(45) Date de publication et mention de la délivrance du brevet: **04.05.1994**
(21) Numéro de dépôt: 89109179.5
(22) Date de dépôt: 22.05.1989
(51) Int. Cl.: A47J 31/36, A47J 31/40

(54) **Dispositif pour la préparation de boissons**
Vorrichtung zur Herstellung von Getränken
Apparatus for preparing beverages

(30) Priorité: 08.06.1988 CH 2177/88
(43) Date de publication de la demande: 13.12.1989
(73) Titulaire: SOCIETE DES PRODUITS NESTLE S.A., CH-1800 Vevey (CH)
(72) Inventeur: Frisch, Martin, CH-8864 Reichenburg (CH)

(56) Documents cités:
- EP-A- 0 073 496
- DE-U- 7 827 682
- FR-A- 2 130 585
- FR-A- 2 299 839
- FR-A- 2 470 574
- GB-A- 2 139 481

## Description

L'invention concerne un dispositif pour la préparation de boissons, comportant un réservoir d'eau relié à une pompe, à un thermobloc et à une sortie d'eau chaude allant sur le café à extraire et disposé en dérivation entre le thermobloc et la pompe, une électrovanne.

On connaît déjà de telles machines. Par exemple, le brevet FR 2130585 concerne une machine à café permettant de produire de la vapeur si on le souhaite, mais sans aucune indication sur la possibilité de faire des cafés de longueur de tasse constante. D'autre part, les brevets EP 73496 et GB 2139481 concernent des machines pour préparer deux types de café, à savoir un café normal et un café espresso. Finalement, le brevet FR 2470.574 concerne un dispositif permettant de varier le dosage d'eau pour des machines à café espresso. Aucun de ces dispositifs ne permet de garantir des extractions de longueur constante.

Les machines à café avec débit-mètre sont connues. Pour de telles machines, il est important pour pouvoir assurer une constance dans la longueur des tasses de café produites de disposer d'une électrovanne avec conduit de retour d'eau vers le réservoir principal. A l'heure actuelle, cette électrovanne est disposée à la sortie du thermobloc. Le fonctionnement est le suivant: lorsque la machine est sollicitée, l'eau arrivant du réservoir passe dans le débit-mètre, dans la pompe, dans le thermobloc et est retournée par électrovanne ouverte vers le réservoir. Au bout d'une durée de l'ordre de la seconde, l'électrovanne est fermée et le débit-mètre et l'électronique y associée prennent en compte pour la longueur de tasse la quantité d'eau passant dans ledit débit-mètre. Or ce positionnement de l'électrovanne a des inconvénients suivant le moment que l'on choisit pour sa fermeture. Si on choisit de fermer l'électrovanne lorsque l'eau a complètement rempli le thermobloc, cela signifie que tout l'air présent dans ledit thermobloc aura été refoulé vers le réservoir. Par contre, on sera bien sûr que la longueur de tasse sera toujours constante. Cependant, la présente machine étant surtout utilisée pour préparer un café espresso, on sait maintenant par expérience que pour assurer un bon café espresso, il faut que l'eau de l'extraction soit mélangée avec l'air présent dans le thermobloc, ce qui conduit à un café ayant une mousse onctueuse et durable. Si par contre, on choisit de fermer l'électrovanne avant que l'eau ait complètement rempli le thermobloc, on aura effectivement un mélange d'air et d'eau, mais comme dans ce cas, on ne saura pas jusqu'où exactement l'eau est arrivée dans le thermobloc, il n'y aura pas de constance dans les longueurs de tasse lors d'extractions successives.

Le dispositif, objet de la présente invention, permet de pallier aux inconvénients mentionnés ci-dessus en assurant toujours un bon mélange d'eau et d'air dans le thermobloc et une bonne constance de longueur de tasse pour différentes extractions.

L'invention concerne un dispositif selon le préambule de la revendication 1, comprenant un débit-mètre entre le réservoir d'eau et la pompe et une soupape anti-retour à la sortie du thermobloc et dans lequel l'électrovanne a un conduit permettant le retour de toute l'eau vers le réservoir lorsque celle-ci est ouverte.

La présence de l'électrovanne avant le thermobloc permet de remplir complètement d'eau tous les conduits depuis le réservoir jusqu'avant le thermobloc et ceci de manière constante pour toutes les extractions, avant la fermeture de ladite électrovanne. La pompe comporte une soupape anti-retour pour être sûr que l'eau retourne bien au réservoir par la dérivation.

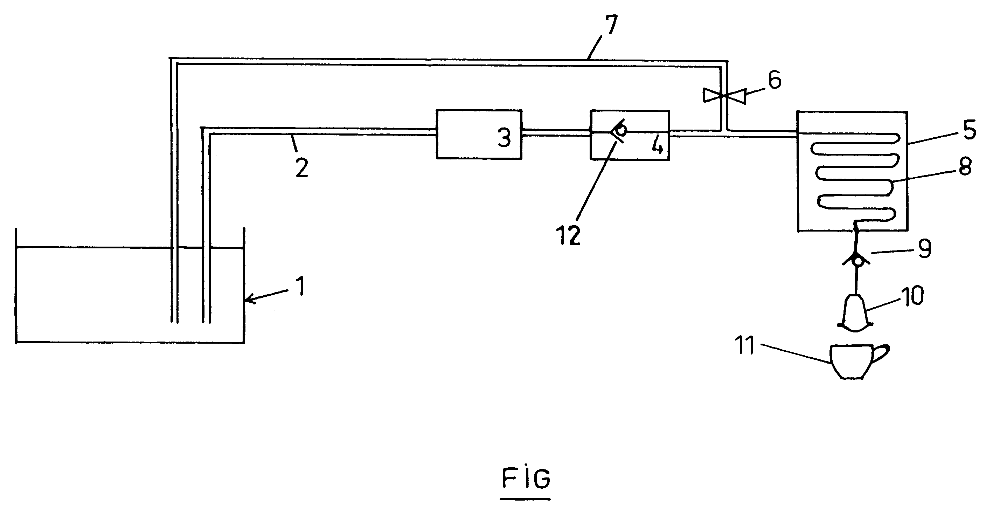

Le fonctionnement du dispositif sera expliqué en référence au dessin.

Le dispositif selon l'invention permet d'effectuer l'extraction de tout type de café, en particulier la préparation d'espresso, notamment une boisson à partir des cartouches faisant l'objet du brevet CH 605 293.

Le débit-mètre utilisable est de type connu dans les machines à café. On utilise de préférence un débit-mètre à ailettes.

Ce thermobloc est soit à serpentin linéaire tel que sur le dessin, soit à serpentin circulaire.

La soupape anti-retour à la sortie du thermobloc a d'une part comme fonction d'éviter le retour du café lors de l'extraction et d'autre part, lorsque l'électrovanne est ouverte, d'éviter une sortie d'air du thermobloc de manière à ce que l'eau n'entre pas dans ledit thermobloc. Cette soupape anti-retour est du type à ressort avec obturateur.

La suite de la description est faite en référence au dessin unique représentant le montage schématique du dispositif selon l'invention.

Un réservoir d'eau (1) est relié par un conduit (2) au débit-mètre (3), à une pompe (4) et au thermobloc (5). On dispose entre le thermobloc (5) et la pompe (4), une électrovanne (6) avec un conduit (7) retournant au réservoir (1). Le thermobloc (5) est du type à serpentin linéaire (8) et une soupape anti-retour (9) se trouve à sa sortie. Cette soupape (9) est réglée à l'avance pour s'ouvrir à une pression déterminée de l'eau, par exemple de l'ordre de 2 atmosphères, de manière à éviter que l'eau ne coule en permanence. Pour l'extraction du café, on utilise une capsule (10) faisant l'objet du brevet CH 605 293. On recueille le café dans un récipient (11). Une soupape anti-retour (12) de la pompe est du même type que celle à la sortie du thermobloc.

Le dispositif fonctionne de la manière suivante: lorsqu'on fait fonctionner la machine, la pompe (4) se met en marche, l'eau étant amenée jusqu'à l'électrovanne (6). L'électrovanne est ouverte, l'eau retourne donc dans le réservoir (1) en raison de la présence de la soupape anti-retour (12) et la pression de l'air dans le thermobloc empêche ce dernier de se remplir du fait de la fermeture de la soupape (9). Les impulsions du débit-mètre ne sont pas prises en considération par l'électronique y associée pour la longueur de tasse. Lorsque le débit-mètre constate un débit d'eau constant, l'électrovanne est alimentée et se ferme. Les impulsions du débit-mètre sont comptées, l'eau remplit le thermobloc, elle ouvre la soupape (9), elle passe à travers la capsule (10) et on recueille la boisson prête.

Le retard de fermeture de l'électrovanne permet de remplir d'eau tous les conduits entre le débit-mètre, la pompe et l'électrovanne. D'où une mesure de café plus constante et une possibilité de prendre lors de l'extraction l'air présent dans le thermobloc. Il est bien entendu que le débit-mètre est programmé pour une longueur de tasse déterminée.

## Revendications

1. Dispositif pour la préparation de café, comportant un réservoir d'eau (1) relié à une pompe (4), à un thermobloc (5) et à une sortie d'eau chaude allant sur le café à extraire (10) et disposé en dérivation entre le thermobloc et la pompe, une électrovanne (6) caractérisé en ce qu'il comprend un débit/mètre (3) entre le réservoir d'eau et la pompe et une soupape anti-retour (9) à la sortie du thermobloc et en ce que l'électrovanne a un conduit (7) permettant le retour de toute l'eau vers le réservoir lorsque celle-ci est ouverte.

2. Dispositif selon la revendication 1, caractérisé en ce que le débit-mètre (3) est un débit-mètre à ailettes.

3. Dispositif selon l'une des revendications 1 et 2, caractérisé en ce que le thermobloc (5) est à serpentin circulaire ou linéaire.

4. dispositif selon l'une des revendications 1 à 3, caractérisé en ce que la pompe (4) comporte une soupape anti-retour (12).

5. Dispositif selon l'une des revendications 1 à 4, caractérisé en ce que la soupape anti-retour (9, 12) du thermobloc et de la pompe est du type à ressort avec obturateur.

## Claims

1. An arrangement for the preparation of coffee, having a water reservoir (1) connected to a pump (4), to a heating unit (5) and to a hot water outlet opening onto the coffee (10) to be extracted and - branched between the heating unit and the pump - an electrovalve (6), characterized in that it comprises a flowmeter (3) between the water reservoir and the pump and a non-return valve (9) at the exit of the heating unit and in that the electrovalve comprises a pipe (7) for the return of water to the reservoir when it is open.

2. An arrangement as claimed in claim 1, characterized in that the flowmeter (3) is a bladed flowmeter.

3. An arrangement as claimed in claim 1 or 2, characterized in that the heating unit (5) is of the linear or circular coil type.

4. An arrangement as claimed in any of claims 1 to 3, characterized in that the pump (4) comprises a non-return valve (12).

5. An arrangement as claimed in any of claims 1 to 4, characterized in that the non-return valve (9,12) of the heating unit and the pump is of the spring type with shutter.

## Patentansprüche

1. Vorrichtung zur Herstellung von Kaffee, bestehend aus einem Wasserbehälter (1), der mit einer Pumpe (4), einem Thermoblock (5) und einem über den zu extrahierenden Kaffee (10) laufenden Heißwasserausgang verbunden ist, und einem zwischen dem Thermoblock und der Pumpe parallelgeschalteten Magnetventil (6), dadurch gekennzeichnet, daß sie zwischen dem Wasserbehälter und der Pumpe einen Durchflußmesser (3) und am Ausgang des Thermoblocks ein Rückschlagventil (9) umfaßt und daß das Magnetventil eine Leitung (7) besitzt, die die Rückkehr des gesamten Wassers zum Behälter gestattet, wenn das Magnetventil offen ist.

2. Vorrichtung nach Anspruch 1, dadurch gekennzeichnet, daß der Durchsatzmesser (3) ein Flügeldurchsatzmesser ist.

3. Vorrichtung nach einem der Ansprüche 1 und 2, dadurch gekennzeichnet, daß der Thermoblock (5) eine kreisförmige oder lineare Schlange besitzt.

4. Vorrichtung nach einem der Ansprüche 1 bis 3, dadurch gekennzeichnet, daß die Pumpe (4) ein Rückschlagventil (12) besitzt.

5. Vorrichtung nach einem der Ansprüche 1 bis 4, dadurch gekennzeichnet, daß das Rückschschlagventil (9, 12) des Thermoblocks und der Pumpe eine Feder mit einem Absperrelement aufweist.
